# EUROPEAN PATENT APPLICATION

(11) **EP 1 259 027 A2**
(43) Date of publication of application: **20.11.2002**
(21) Application number: 02253112.3
(22) Date of filing: 02.05.2002
(51) Int. Cl.: H04L 12/18, H04L 12/56

(54) **Method and device for multicast routing**

(30) Priority: 07.05.2001 JP 2001136598
(71) Applicant: NTT DoCoMo, Inc., Tokyo 100-6150 (JP)
(72) Inventor: Hidetoshi, Ueno, Yokosuka-shi, Kanagawa 237-0071 (JP); Norihiro, Ishikawa, Yokohama-shi, Kanagawa 222-0004 (JP); Hideharu, Suzuki, Yokohama-shi, Kanagawa 233-0003 (JP)
(74) Representative: Rees, Alexander Ellison

(57) **Abstract**

A multicast packet distribution method used for distributing a packet from an origination host to a destination host belonging to a multicast group via communication nodes in a packet communication network that includes a plurality of domains is provided. The multicast packet distribution method includes the steps of: sending a packet to a multicast group in a domain from the origination host; transferring the packet to the domain via a communication node in the outside of the domain according to a unicast routing procedure; and wherein, when a predetermined communication node in the domain receives the packet, the predetermined communication node transfers the packet to the destination host according to a multicast routing procedure.

## Description

### BACKGROUND OF THE INVENTION

### 1. Field of the Invention

The present invention relates to a multicast packet distribution method and the system in a packet communication network. More particularly, the present invention relates to a multicast packet distribution method and the system for distributing packets by using a domain address in a packet communication network.

In addition, the present invention relates to an address structure of a packet used for the multicast packet distribution method and the system.

Further, the present invention relates to a mobile station that receives the packet distributed by the multicast packet distribution method.

### 2. Description of the Related Art

In a packet communication network, when packets (data) are multicasted within a limited range, distance (the number of hops and the like) between a sending host and a receiving host to which the packet can reach in the packet network is controlled by using a method of TTL (Time to Live) and the like.

By using this multicast packet distribution method, the packets can be multicasted to a plurality of receiving hosts that exist within a predetermined area (within a predetermined number of hops) having its center at the sending host.

However, according to the above-mentioned multicast packet distribution method, since the distance (the number of hops and the like) from the sending host to the receiving host to which the packet can reach is controlled, a region within which multicasted packets can be received can not be established freely. For example, it is impossible to multicast packets only to an area far from the sending host.

In addition, according to the conventional multicast distribution method, since the packets are multicasted (multicast routing process) to receiving hosts that are distributed widely from the sending host, backbone routers that relay the packets in the network need to hold and manage multicast routing information for each multicast address, and for each interface.

Therefore, a large amount of information must be managed in each backbone router in order to realize multicast distribution of packets.

### SUMMARY OF THE INVENTION

A first object of the present invention is to provide a multicast packet distribution method and the system by which the area where multicasted packets are received can be set freely.

A second object of the present invention is to provide an address structure of a packet used in the multicast packet distribution method and the system.

A third object of the present invention is to provide a mobile station that receives the packet multicasted by the multicast packet distribution method.

The first object can be achieved by a multicast packet distribution method used for distributing a packet from an origination host to a destination host belonging to a multicast group via communication nodes in a packet communication network that includes a plurality of domains, the multicast packet distribution method comprising the steps of:
sending a packet to a multicast group in a domain from the origination host;
transferring the packet to the domain via a communication node outside of the domain according to a unicast routing procedure; and
wherein, when a predetermined communication node in the domain receives the packet, the predetermined communication node transfers the packet to the destination host according to a multicast routing procedure.

According to this multicast distribution method, a packet to be sent to a multicast group in a domain from an origination host is transferred via each communication node according to a unicast routing procedure outside of the domain. Then, the packet is transferred to a destination host of the multicast group from a predetermined communication node in the domain according to a multicast routing procedure. Therefore, the packet can be multicasted only to hosts in an area far from the origination host.

In addition, since the packet sent from the origination host is transferred according to the unicast routing procedure outside of the domain, each communication node do not necessarily manage multicast route information.

In the multicast packet distribution method, the packet may include a domain division multicast address having a domain address for specifying the domain and a group address for identifying a group of the destination host, and

the predetermined communication node transfers the packet to the group address according to a multicast routing procedure.

From the viewpoint of specifically realizing the process in each communication node, the multicast distribution method further may include the steps of:
each communication node determining whether the communication node itself is positioned in the domain or outside of the domain;
each communication node that determines itself to be positioned in the outside of the domain transferring the packet to the domain according to a unicast routing procedure;
each communication node that determines itself to be positioned in the domain transfers the packet to a next communication node or to the destination host according to a multicast routing process.

The predetermined communication node that transfers the packet according to the multicast routing procedure can be determined by a proper method. For example, the predetermined communication node can be determined depending on a route on which the packet is transferred from outside of the domain to inside of the domain. Or, by determining candidate communication nodes, the predetermined communication node can be determined as one of the candidate communication nodes when the candidate communication node receives the packet according to the unicast routing procedure.

From the viewpoint of determining a communication node for starting packet transfer according to a multicast routing procedure, the multicast distribution method further may further include the steps of:
each communication node determining whether the communication node itself is positioned in the boundary between the inside and the outside of the domain;
a communication node that determines itself to be positioned in the boundary transferring the packet to a next communication node or the destination host according to a multicast routing procedure.

The first object can also be achieved by a multicast packet distribution system for distributing a packet from an origination host to a destination host belonging to a multicast group via communication nodes in a packet communication network that includes a plurality of domains, each communication node in the multicast packet distribution system comprising:
a node determination part for determining whether the communication node is an outside node positioned outside the domain, or an inside node positioned inside the domain, or a boundary node positioned between the inside and the outside of the domain when the communication node receives the packet;
an outside node distribution part for transferring the packet to the domain according to a unicast routing procedure when the communication node determines itself to be the outside node;
a boundary node distribution part for transferring the packet to the multicast group according to a multicast routing procedure when the communication node determines itself to be a boundary node; and
an inside node distribution part for transferring the packet received according to a multicast routing procedure to the multicast group according to a multicast routing procedure when the communication node determines itself to be an inside node.

The second object can be achieved by an address structure of a packet used in a multicast packet distribution method used for distributing a packet from an origination host to a destination host belonging to a multicast group via communication nodes in a packet communication network that includes a plurality of domains, the address structure comprising:
a domain address for specifying a domain;
a group address for identifying a multicast group of the destination host; and
an identifier for indicating that the domain address and the group address can be used.

For distributing the packet having this address structure, the packet is transferred to the domain address according to a unicast routing procedure, and a predetermined communication node in the domain specified by the domain address transfers the packet to the group address according to the multicast routing procedure. As a result, data can be multicasted to destination hosts in a group identified by the group address.

The third object can be achieved by a mobile station that receives a packet multicasted according to a multicast packet distribution method used for distributing a packet from an origination host to the mobile station belonging to a multicast group via communication nodes in a packet communication network that includes a plurality of domains, the multicast packet distribution method comprising the steps of:
sending a packet to a multicast group in a domain from the origination host;
transferring the packet to the domain via a communication node outside of the domain according to a unicast routing procedure; and
wherein, when a predetermined communication node in the domain receives the packet, the predetermined communication node transfers the packet to the mobile station according to a multicast routing procedure, and the packet includes a domain division multicast address having a domain address for specifying the domain and a group address for identifying the multicast group of the mobile station;
the mobile station comprising:
a group registration part for registering the group address;
a domain obtaining part for obtaining the domain address that specifies a domain to which a communication node for the mobile station belongs from the communication node itself for the mobile station;
a multicast address generation part for generating a multicast address by combining the domain address and the group address;
a sending part for sending the multicast address to the communication node for the mobile station;
wherein the communication node for the mobile station transfers the packet to the mobile station by using the multicast address.

According to this mobile station, the multicast address is generated by combining the domain address obtained from the communication node belonging to a domain where the mobile station exists and the registered group address. Therefore, it becomes unnecessary for the user of the mobile station to change the multicast address for the domain every time the domain where the mobile station exists changes.

The third object can also be achieved by a mobile station that receives a packet multicasted according to a multicast packet distribution method used for distributing a packet from an origination host to the mobile station belonging to a multicast group via communication nodes in a packet communication network that includes a plurality of domains, the multicast packet distribution method comprising the steps of:
sending a packet to a multicast group in a domain from the origination host;
transferring the packet to the domain via a communication node outside of the domain according to a unicast routing procedure; and
wherein, when a predetermined communication node in the domain receives the packet, the predetermined communication node transfers the packet to the mobile station according to a multicast routing procedure, and the packet includes a multicast address having a domain address for specifying the domain and a group address for identifying the multicast group of the mobile station;
the mobile station comprising:
a multicast address registration part for registering the multicast address;
a domain obtaining part for obtaining the domain address that specifies a domain to which the communication node for the mobile station belongs from the communication node itself for the mobile station;
a domain address determination part for determining whether a domain address obtained by the domain obtaining part and a domain address included in a multicast address registered by the multicast address registration part are the same;
a sending part for sending the multicast address to the communication node for the mobile station when it is determined that the domain address obtained by the domain obtaining part and the domain address included in a multicast address registered by the multicast address registration part are the same; and
wherein the communication node for the mobile station transfers the packet to the mobile station by using the multicast address.

According to this mobile station, by registering a multicast address specifying a multicast group in a domain where data is multicasted, when the mobile station enters the domain specified by the domain address included in the multicast address, the mobile station can automatically receive the packet sent to the multicast group corresponding to the multicast address. Therefore, the user of the mobile station can receive desired multicast information without knowing in which domain the mobile station exists.

### BRIEF DESCRIPTION OF THE DRAWINGS

Other objects, features and advantages of the present invention will become more apparent from the following detailed description when read in conjunction with the accompanying drawings, in which:
Fig.1 shows an example of a procedure for multicasting packets in a packet communication network;
Fig.2 is a figure for explaining a multicast distribution method of an embodiment of the present invention;
Fig.3 shows an example of an address structure of a packet distributed according to a multicast distribution method of an embodiment of the present invention;
Fig.4 shows a flowchart showing an example of a process procedure performed by a router that distributes packets according to a multicast distribution method of an embodiment of the present invention;
Fig.5 shows a flowchart of an example of a procedure for determining whether an address included in a received packet is a domain division multicast address;
Fig.6 shows a router Ro outside the domain, a router Ri inside the domain, and a boundary router;
Fig.7 shows a flowchart of a procedure for determining whether a router is a router Ri inside the domain, or a boundary router Rb, or a router Ro outside the domain,
Fig.8 shows a relationship between a network configuration and the boundary router in the packet communication network;
Fig.9 is a flowchart showing an example of a procedure performed by a mobile station in the case where the host that receives the packet is the mobile station; and
Fig.10 is a flowchart showing another example of a procedure performed by a mobile station in the case where the host that receives the packet is the mobile station.

### DETAILED DESCRIPTION OF THE PREFERRED EMBODIMENTS

In the following, embodiments of the present invention will be described with reference to figures.

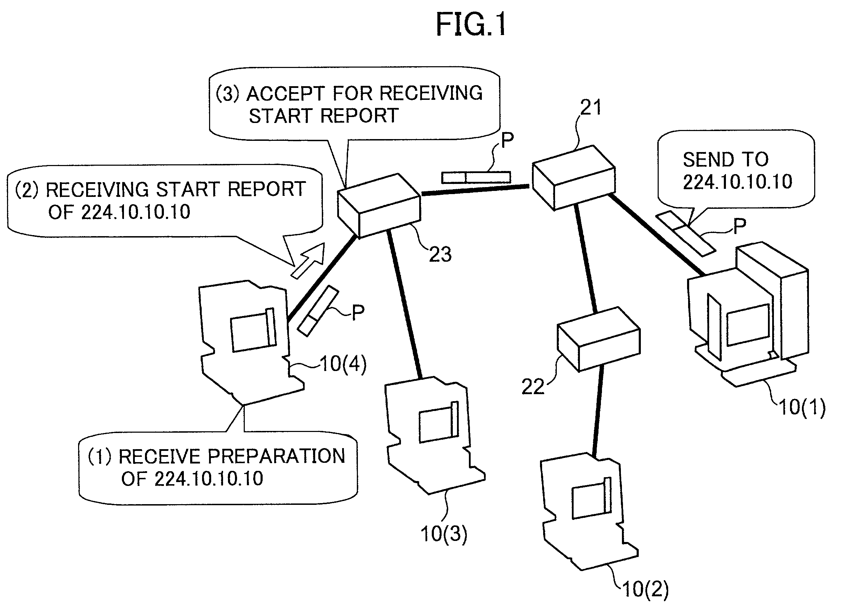

In a packet communication network shown in Fig.1, multicast distribution of packets is performed in the following way, for example. Fig.1 is a schematic block diagram of the packet communication network.

As shown in Fig.1, the packet communication network includes routers 21, 22 and 23 (communication nodes) connected to communication routes. A host 10 (1) (PC terminal, server, portable terminal and the like) is connected to the router 21 via the communication route, and the host 10 (2) is connected to the router 22. In addition, hosts 10 (3) and 10 (4) are connected to the router 23 via communication routes.

In the above-mentioned packet communication network, for example, IP addresses of 224.0.0.0∼239.255.255.255 (class D) are assigned as addresses (which will be called multicast addresses hereinafter) of a multicast group. This multicast group is associated with a program which is multicasted and with information type and the like. Accordingly, packets corresponding to a program or a type of information can be distributed to hosts having the corresponding multicast address.

In a packet communication network shown in Fig.1, a procedure of multicast distribution of packets will be described using an example in which the host 10(4) receives packets of a program multicasted from the host 10(1).

In order to receive distribution of content (for example, a weather forecast), the host 10(4) performs a receive declaration (JOIN) of a multicast group of the destination of the content (for example, according to IGMP(Internet Group Management Protocol)). In this receive declaration, a multicast address (224.10.10.10, for example) for specifying distribution destination of content is set in a predetermined register according to an operation by the user. After that, the multicast address (224.10.10.10) is provided to the router 23 connected to the host 10(4) by the host 10(4) (report of receive start). Then, the router 23 that receives the notification enters the multicast address while associating it with the communication route directed to the host 10(4) (acceptance of report of receive start).

In a state in which the host 10(4) completes the receive declaration (JOIN), when the host 10(1) sends a packet p of information of content to the multicast address (multicast group), the packet p is successively transferred via each router 21, 22, 23 in the packet network according to a multicast routing procedure. In the process, the router 22 that connects the host 10(2) that has not performed the receive declaration (JOIN) of the multicast group discards the packet p. In addition, the router 23 to which the host 10(4) and the host 10(3) are connected does not send the packet p to the communication route to the host 10(3) and sends the packet p only to the communication route to the host 10(4), since host 10(3) has not performed the receive declaration (JOIN) and the host 10(4) has performed the receive declaration (JOIN).

According to this procedure, the packet p of the content is successively transferred from the host of origination of distribution only to the hosts that have performed the receive declaration (JOIN) of the multicast group that becomes the destination of distribution of content in the packet communication network.

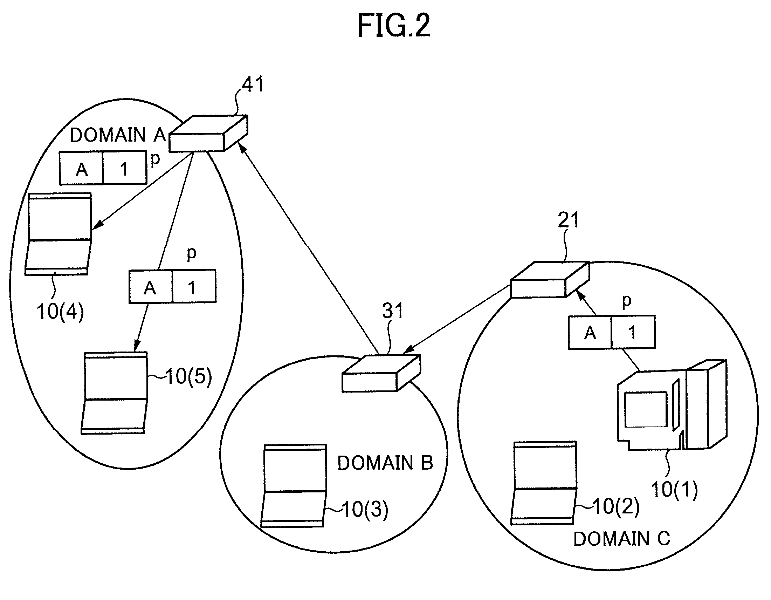

Next, as shown in Fig.2, a method of multicast distribution of the packet p in a case where the packet communication network is logically divided into a plurality of regions (which will be called domains or subnetworks hereinafter) will be described. In this example, the packet p is multicasted to the hosts 10(4) and 10(5) belonging to a domain A from the host 10(1) belonging to a domain C. The packet p is not distributed to the hosts 10(2) and 10(3) belonging to domains C and B irrespective that of whether the hosts have performed the receive declaration (JOIN) of the multicast group or not.

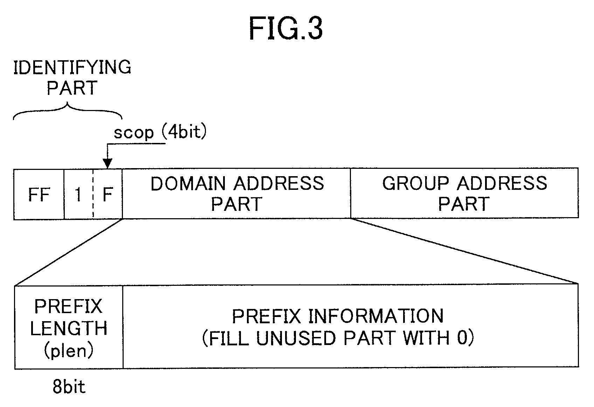

The IP address that shows the destination of each packet sent from the host 10(1), which is the originator of information, has a structure shown in Fig.3.

As shown in Fig.3, the IP address includes an identifying part, a domain address part and a group address part. The identifying part, for example, includes two bytes, in which the first byte is an identifier indicating whether the IP address is a multicast address, that is, whether the packet should be distributed according to the multicast distribution method.

When the first byte is "FF" (hexadecimal representation, and so forth), it indicates that the IP address is a multicast address. The last four bits (which will be called the scop part) of the second byte of the identifying part is an identifier indicating whether the IP address is used in the multicast distribution method of the present invention (which will be called a domain division multicast distribution method).

When the scop part is "F", the IP address indicates a domain division multicast address.

The domain address part includes prefix information for specifying a domain (subnetwork), which is a region within which the packet is distributed, and a length of prefix (plen) indicating the length of the prefix information. The group address part is address information for identifying a group of distribution destination of content in the domain.

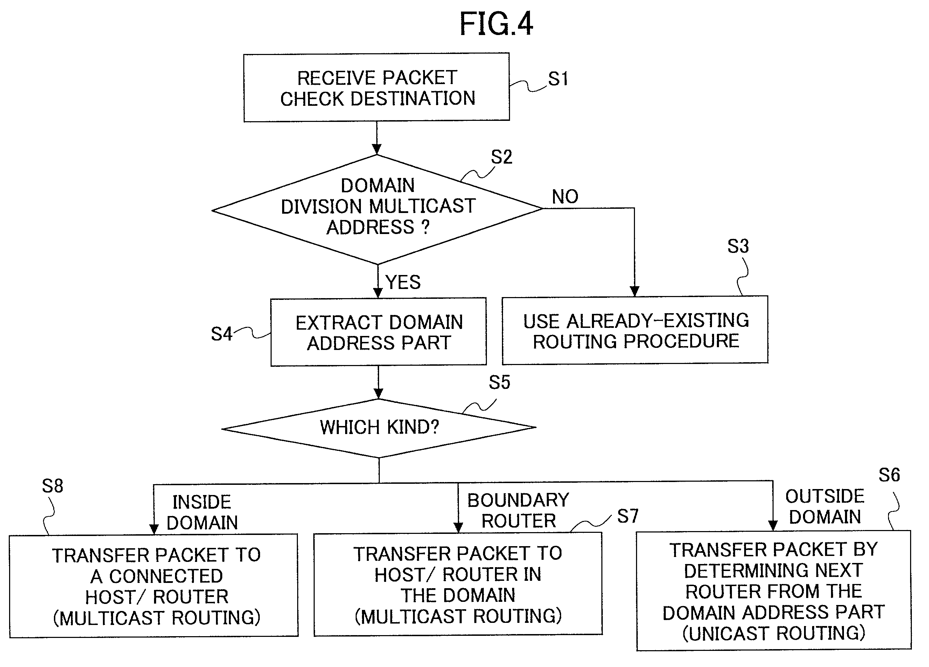

Each router (router 21, 31, 41 in the packet communication network shown in Fig.2) performs processes according to the procedure shown in Fig.4, for example, in which the packet having the IP address of the above-mentioned structure is transferred in the packet communication network.

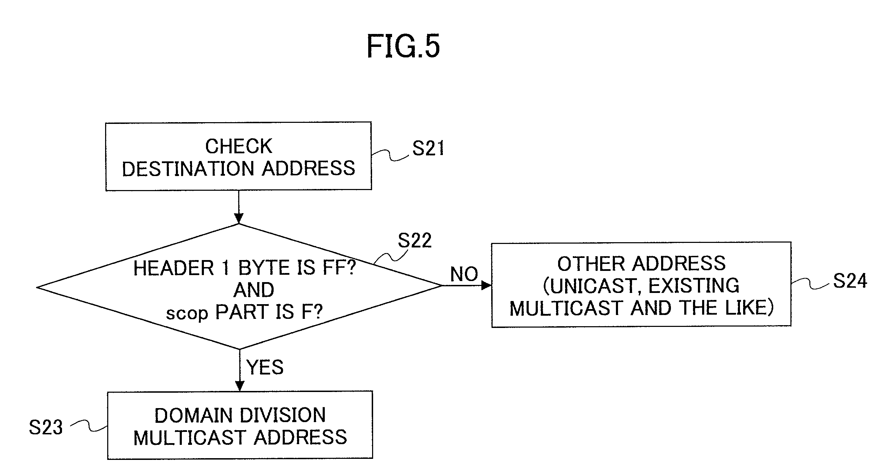

In Fig.4, when the packet p is received in step 1, it is determined whether the IP address (specifying sending destination) included in the packet p is a domain division multicast address or not in step 2. This determination is performed according to the procedure shown in Fig.5, for example. That is, after checking the IP address from the received packet p in step 21, it is determined whether the first byte of the identifying part in the IP address (Fig.3) is "FF" and the scop part is "F". When the first byte of the identifying part in the IP address is "FF" and the scop part is "F", the IP address included in the received packet p is determined to be the domain division multicast address in step 23. If not, the IP address is determined to be another kind of IP address (unicast distribution or existing multicast distribution) in step 24.

In Fig.4, when the IP address included in the received packet is determined to be another IP address (step 24 in Fig.5), the received packet is transferred to the adjacent router according to a known routing method in step 3. On the other hand, when the IP address included in the received packet p is determined to be a domain division multicast address (step 23 in Fig.5), the main address part is extracted from the IP address in step 4.

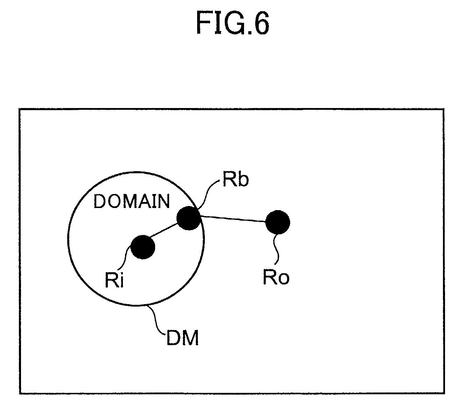

When the domain address part is extracted from the IP packet, it is determined whether the router itself is a router positioned in the domain DM specified by the domain address part (in the following, this router will be called a router Ri inside domain) as shown in Fig.6, or a router positioned in the domain DM and in a boundary part between the domain and the outside of the domain (this router will be called a boundary router Rb hereinafter), or a router positioned outside of the domain DM (this router will be called a router Ro outside domain) in step 5. The details of this determination process will be explained later. When the router determines that the router itself is the router Ro outside domain, the router determines a next router on the basis of the domain address part and transfers the received packet to the next router in step 6. This process is performed by a procedure of the unicast routing process.

As a result, the router 21 of the domain C and the router 31 of the domain B function as routers Ro outside of the domain, in which the router 21 receives the packet p including the IP address (domain division multicast address) having "A" as the domain address part (specifying domain A) and "1" as the group address part from the host 10(1) shown in Fig.2, and the router 31 received the packet from other router. And the routers 21 and 31 transfers the received packet p to the next router as a packet destined for the domain A (unicast routing procedure).

On the other hand, in a router determining that the router itself is a boundary router Rb, interface (unicast routing) with the adjacent router in the receiving side is different from interface (multicast routing) with the adjacent router in the sending side. That is, the router transfers the packet p received according to the above-mentioned unicast routing procedure from the adjacent router to the next router by using the multicast routing procedure, or, the router transfers the received packet to the host that has performed receive declaration (JOIN) of the multicast group specified by the multicast address (domain address part and group address part) in step 7. In addition, the router determined to be the router Ri inside domain transfers the packet p received according to the multicast routing procedure to the next router according to the multicast routing procedure, or, the router transfers the packet p to a host that has performed the receive declaration (JOIN) of the multicast group specified by the multicast address in step 8.

By performing processes according to the above-mentioned procedure in the routers 21, 31 and 41 in the packet network shown in Fig.2, the packet p, which is sent from the host 10(1) of the domain C, having the domain division multicast address of ["A" (domain address part), "1" (group address part)] is transferred to the router 41 that is a boundary router Rb of domain A via the routers 21 and 31 that are routers Ro outside of the domain A to the unicast routing procedure. The router 41 transfers the received packet p to the hosts according to the multicast routing process (multicast distribution).

Then, each router Ri in the domain A (subnetwork) successively transfers the packet p that is multicasted from the router 41 according to the multicast routing procedure. As a result, the hosts 10(4) and 10(5) receive the packet p from routers connected to the hosts respectively, in which the hosts 10(4) and 10(5) have performed receive declaration (JOIN) for the multicast group specified by the multicast address "A·1", and the hosts are connected to the routers in the domain A.

According to such multicast packet distribution method, content can be multicasted only to hosts existing within a domain far from the host 10(1) that is the source of distribution.

The routers 21 and 31 outside of the domain A may only manage route information on the basis of the unicast routing process, and it is not necessary for routers 21 and 31 to manage route information on the basis of the multicast routing procedure.

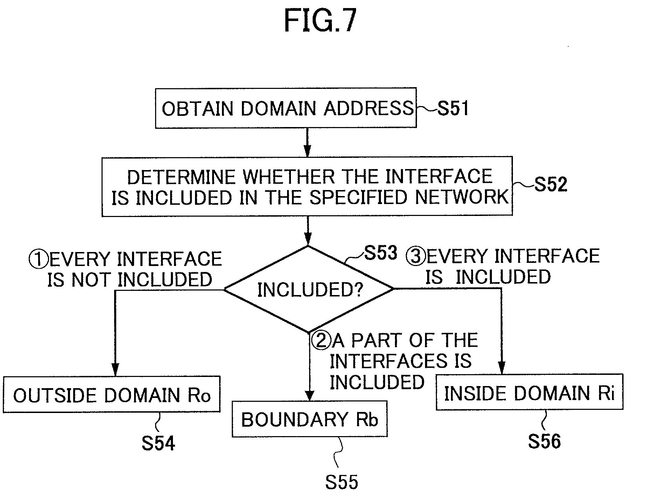

In the following, the process for determining whether a router is a router Ri inside domain, a boundary router Rb, or a router Ro outside domain (step 5 in Fig.4) will be described in detail. This process will be performed according to the procedure shown in Fig.7, for example.

When the router receives the packet from the adjacent router, the router obtains information (network prefix information and the length of prefix) of the domain address part (Fig.3) included in the packet in step 51. Then, the router compares network prefix information included in the address of each interface of the router itself with network prefix information obtained from the received packet, and determines whether each interface is included in the subnetwork (domain) specified by the network prefix information of the received packet in step 52. When it is determined that every interface is not included in the subnetwork (① in step 53), the router determines that the router itself is a router Ro outside of the domain to which the packet is multicasted in step 54. When some of the interfaces are determined to be included in the subnetwork (② in step 53), the router is determined to be the boundary router Rb positioned in the boundary part between the inside of the domain and the outside of the domain in step 55. When every interface is determined to be included in the subnetwork (③ in step 53), the router is determined to be the router Ri positioned within the domain (subnetwork) in which the packet is multicasted in step 56.

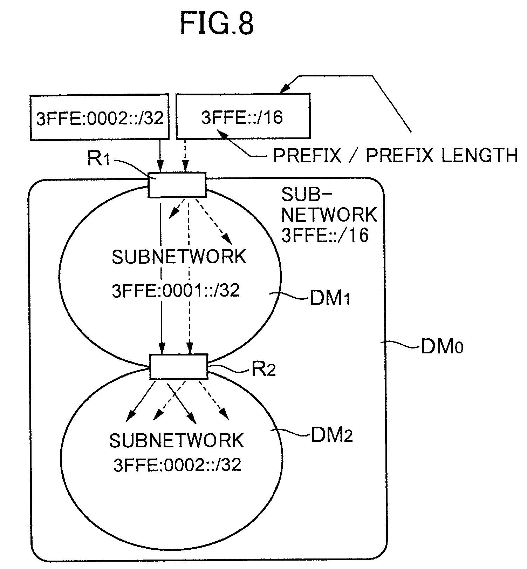

For example, as shown in Fig.8, when the structure of the network is hierarchical such that a parent subnetwork (domain) DM0 includes two subnetworks DM1 and DM2, following network prefix information is provided to each router.

Network prefix information (prefix/length of the prefix : 3FFE::/16) for specifying the parent subnetwork DM0 and network prefix information (3FFE:0001::/32) for specifying the subnetwork DM1 are provided to the router R1 connected to the subnetwork DM1. Network prefix information (prefix/length of the prefix : 3FFE::/16) for specifying the parent subnetwork DM0 and network prefix information (3FFE:0002::/32) for specifying the subnetwork DM2 are provided to the router R2 connected to the subnetwork DM2.

In this case, when the router R1 receives a packet destined for the parent subnetwork DM0 according to the procedure of the unicast routing, the router R1 determines that the router R1 is the boundary router Rb according to the above-mentioned procedure (Fig.7). Then, the router R1 transfers the received packet to each adjacent router according to the procedure of the multicast routing process.

When the router R2 receives the packet that is successively transferred according to the multicast routing procedure, the router R2 determines that the router itself is the router Ri within the domain according to the above-mentioned procedure (Fig.7).

Then, the router R2 transfers the received packet to each adjacent router according to the multicast routing procedure. As a result, the packet is multicasted to the parent subnetwork DM0 (refer to dotted arrows in Fig.8).

When the router R1 receives a packet destined for the subnetwork DM2 in which the domain address part is (3FFE:0002::/32) according to the unicast routing, the router determines that the router itself is the router Ro outside of the domain. Then, the router R1 transfers the received packet to each adjacent router according to the unicast routing procedure. When the router R2 receives the packet which is successively transferred according to the unicast routing procedure, the router R2 determines that the router itself is the boundary router Rb. Then, the router R2 transfers the received packet to each adjacent router according to the multicast routing procedure. As a result, the packet is multicasted to the subnetwork DM2 (refer to solid arrow in Fig.8).

The method for determining whether each router is the router R1 inside domain, the boundary router Rb, or the router Ro outside domain is not limited to the above-mentioned one (Fig.7). For example, a method can be used in which each router manages information on the types of router (Ri, Rb or Ro) for each domain address in the network, and the router determines the type of the router by checking the domain address of the received packet on the basis of the management information.

In the above-mentioned example, the host that receives the packet is a fixed machine such as a PC terminal, a server and the like. Thus, the router to which the host is connected is not changed. Therefore, when the host once performs the receive declaration (JOIN) of the multicast group, the host can continuously receive the packets of content corresponding to the multicast group.

On the other hand, in the case where the host that receives the packet according to the above-mentioned domain division multicast distribution method is a mobile station, the mobile station performs the receive declaration (JOIN) by selecting the multicast address in the domain where the mobile station presently exists. In this case, the user inputs the multicast address of the domain every time when the domain where the mobile station exists changes.

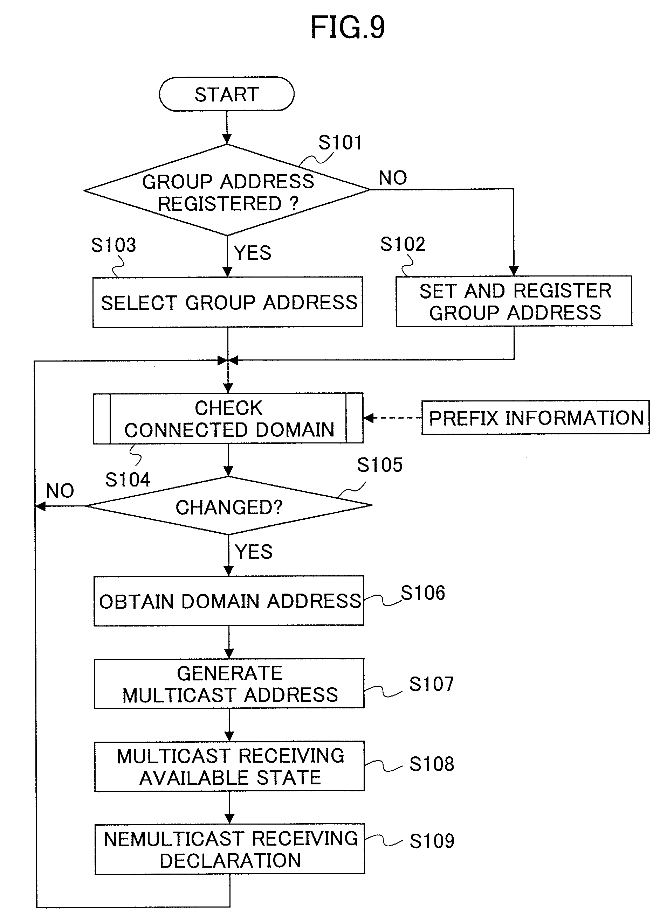

In order to avoid this troublesome input operation, the mobile station performs processes shown in Fig.9, for example.

As shown in Fig.9, the mobile station (host) determines whether the group address that is a part of the IP address for specifying distribution destination is already registered in the mobile station itself (S101). When the group address is not registered (No in S101), the mobile station stores the group address ("1" for example) corresponding to a desired program, for example, in an internal memory on the basis of operation of the user, and sets the group address in a predetermined register (S102). When the group address is already registered (Yes in S101), a group address that the user wants is selected from the registered group addresses (S103). In the selection process of the group address, for example, registered group addresses or programs corresponding to the group addresses are displayed on a display unit of the mobile station, and a group address selected by the user or a group address corresponding to a program selected by the user is set in the predetermined register.

When the group address is set, the mobile station checks the domain (subnetwork) to which the router belongs, in which the mobile station is connected to the router via a wireless communication node (S104). That is, the mobile station receives network prefix information (network address: "A", for example) for specifying the domain to which the router belongs from the router. The mobile station checks the domain by using the network prefix information. After that, for determining whether the domain is changed, the mobile station checks whether the received network prefix information is different from the previously received network prefix information (which is a predetermined initial value when the mobile station receives the information for the first time) (S105), in which the initial value is different from any prefix information in all domains in the system.

When the mobile station determines that the domain to which the router belongs is changed (Yes in S105), the mobile station obtains thus received network prefix information as a domain address (S106), and generates a multicast address ("A·1" for example) by combining the group address set in the internal register and the obtained group address (S107).

After the multicast address is generated, the mobile station sets the multicast address on a predetermined register to enter in a receiving preparation state (S108). Then, the mobile station performs receive declaration for the multicast group specified by the multicast address by sending the multicast address to the router which is connected to the mobile station via the wireless communication node (S109). After that, the router makes an entry of the received multicast address while associating it with the communication route directed to the mobile station (acceptance of report of receive start).

Then, after that, when packets corresponding to the content to be distributed to the multicast group (specified by "A·1", for example) in the domain to which the connected router belongs are multicasted according to the above-mentioned procedure (refer to Figs.2, 4-7), the packets are distributed to mobile stations via wireless communication nodes from the router.

As mentioned above, by setting a group address associated with a program (for example, weather forecast) in a domain (for example, Tokyo) in the mobile station, the user can obtain the information of the program (weather forecast in the Tokyo area) by using the mobile station without performing input operation of the domain address (without knowing about domain).

When the mobile station receiving the information performs handover between wireless communication nodes while moving, the mobile station checks if the router to which the wireless communication node after handover is changed. When the router is changed, the mobile station checks the domain to which the router belongs (S104) and determines whether the domain is changed (S105). The mobile station which is moving performs these processes repeatedly. In the process, when the mobile station determines that the domain to which the router belongs is changed (Yes in S105), it obtains network prefix information ("B", for example) for specifying the changed domain (S106). Then, the mobile station generates a new multicast address (for example, "B·1") by combining the domain address and the group address (S107). After that, the mobile station performs the receive declaration of the multicast group specified by the multicast address according to the procedure the same as the above-mentioned processes (S108, S109). As a result, the mobile station can receive packets distributed to the multicast address in the new domain.

For example, by associating the group address with the type of content or a program (weather forecast, for example), different content of the same type can be distributed for each domain. In this case, the multicast address (domain division multicast address) of the packet for each different content of the same type includes the same group address and different domain address for each domain. Therefore, by registering the group address corresponding to the desired content in the mobile station beforehand, the mobile station can receive the same type of content that is different domain by domain (for example, weather forecast for Tokyo, weather forecast for Osaka and the like) without inputting information on multicast address domain by domain (Tokyo, Osaka and the like).

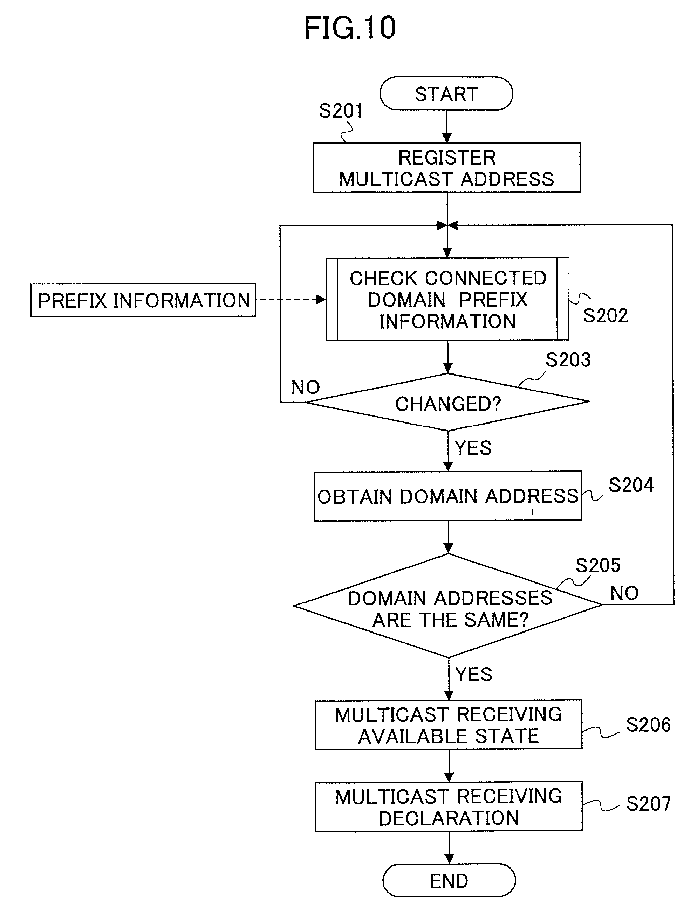

In the following, an example will be described in which multicast addresses are registered in the mobile station beforehand, and when the mobile station enters a domain specified by a domain address included in the multicast addresses, the mobile station can automatically receive the packet multicasted to the multicast address. In this example, the mobile station performs processes according to a procedure shown in Fig.10.

As shown in Fig.10, the mobile station registers a multicast address for specifying distribution destination of content that the user wants (S201). The multicast address includes the domain address and the group address. After that, the mobile station checks the domain (subnetwork) to which the router belongs, in which the mobile station is connected to a wireless communication node (S202) in the same way as the before mentioned example (refer to Fig.9). That is, the mobile station receives network prefix information for specifying the domain to which the router belongs from that router. After that, for determining whether the domain is changed, the mobile station checks whether the received network prefix information is different from the previously received network prefix information (which is a predetermined initial value when the mobile station receives the information for the first time) (S203).

When the mobile station determines that the domain to which the router connected to the mobile station belongs is changed (Yes in S203), the mobile station obtains thus received network prefix information as a domain address (S204). After that, the domain address is extracted from the multicast address that is registered in the above-mentioned way, and it is determined whether the extracted domain address and the domain address from the router are the same (S205).

If they are not the same, every time when performing handover between the wireless communication nodes, the mobile station determines whether the router connected to the wireless communication node of the handover destination is changed. When it is determined that the router is changed, the mobile station checks the domain to which the router belongs on the basis of the network prefix information obtained from the router which is changed (S202). Then, it is determined whether the domain is changed (S203). When it is determined that the domain is changed (Yes in S203), it is determined whether the domain address included in the registered multicast address and the domain address from the router are the same (S204, S205). While the mobile station moves, these processes (S202-S205) are performed repeatedly.

While performing these process, it is determined that the domain address from the router and the domain address extracted from the registered multicast address (Yes in S205), the mobile station sets the multicast address on a predetermined register to enter in a receiving preparation state (S206) since the mobile station moves in a domain where multicasting of desired content is performed. Then, the mobile station performs receive declaration for the multicast group specified by the multicast address by sending the multicast address to the router which is connected to the mobile station via the wireless communication node (S207).

After that, the router makes an entry of the received multicast address while associating it with the communication route directed to the mobile station (acceptance of report of receive start). Then, when the router receives the packet of the content to be distributed to the multicast group, the router distributes the packet to the mobile station via the wireless communication node. The mobile station performs receiving process of the thus received packet.

According to the above-mentioned example, by registering a multicast address specifying a destination of multicasting information, the mobile station can automatically receive the multicasting information (for example, weather forecast) in a specific domain (for example, in Tokyo) when the mobile station enters the area corresponding to the domain.

In the above-mentioned example, the process in step 5 in Fig.4 (process shown in Fig.7) corresponds to the node determination part, the process in step 6 corresponds to the outside node distribution part, the process in step 7 corresponds to the boundary node distribution part, and the process in step 8 corresponds to the inside node distribution part.

The process in S101 in Fig.9 corresponds to the group registration part, the processes S104-106 corresponds to the domain obtaining part, the process in S107 corresponds to the multicast address generation part, and the process in S109 corresponds to the sending part. In addition, the process in S201 in Fig.10 corresponds to the multicast address registration part, the processes S202-204 corresponds to the domain obtaining part, the process in S205 corresponds to the multicast address determination part, and the process in S207 corresponds to the sending part.

As mentioned above, according to the present invention, it becomes possible to multicast packets to a host in a domain far from the origination host. Thus, the multicast packet distribution method and the system for freely setting an area where the packets are multicasted can be realized.

In addition, according to the present invention, an address structure of a packet used in the multicast packet distribution method and the system can be provided.

In addition, according to the present invention, a mobile station can receive the packets multicasted according to the multicast packet distribution method.

The present invention is not limited to the specifically disclosed embodiments, and variations and modifications may be made without departing from the scope of the invention.

## Claims

1. A multicast packet distribution method used for distributing a packet from an origination host to a destination host belonging to a multicast group via communication nodes in a packet communication network which includes a plurality of domains, said multicast packet distribution method **characterized by** the steps of:
sending a packet to a multicast group in a domain from said origination host;
transferring said packet to said domain via a communication node in the outside of said domain according to a unicast routing procedure; and
wherein, when a predetermined communication node in said domain receives said packet, said predetermined communication node transfers said packet to said destination host according to a multicast routing procedure.

2. The multicast distribution method as claimed in claim 1, wherein said packet includes a domain division multicast address having a domain address for specifying said domain and a group address for identifying a group of said destination host, and
said predetermined communication node transfers said packet to said group address according to a multicast routing procedure.

3. The multicast distribution method as claimed in claim 1, said multicast distribution method further comprising the steps of:
each communication node determining whether said communication node itself is positioned in said domain or in the outside of said domain;
each communication node that determines itself to be positioned in the outside of said domain transferring said packet to said domain according to a unicast routing procedure;
each communication node that determines itself to be positioned in the said domain transfers said packet to a next communication node or to said destination host according to a multicast routing process.

4. The multicast distribution method as claimed in claim 2, said multicast distribution method further comprising the steps of:
each communication node determining whether said communication node itself is positioned in said domain or in the outside of said domain;
each communication node that determines itself to be positioned in the outside of said domain transferring said packet to said domain according to a unicast routing procedure;
each communication node that determines itself to be positioned in the said domain transfers said packet to a next communication node or to said destination host according to a multicast routing process.

5. The multicast distribution method as claimed in claim 3, said multicast distribution method further comprising the steps of:
each communication node determining whether said communication node itself is positioned in the boundary between the inside and the outside of said domain;
a communication node that determines itself to be positioned in said boundary transferring said packet to a next communication node or said destination host according to a multicast routing procedure.

6. A multicast packet distribution system for distributing a packet from an origination host to a destination host belonging to a multicast group via communication nodes in a packet communication network that includes a plurality of domains, each said communication node in said multicast packet distribution system **characterized by**:
a node determination part for determining whether said communication node is an outside node positioned outside said domain, or an inside node positioned inside said domain, or a boundary node positioned between the inside and the outside of said domain when said communication node receives said packet;
an outside node distribution part for transferring said packet to said domain according to a unicast routing procedure when said communication node determines itself to be said outside node;
a boundary node distribution part for transferring said packet to said multicast group according to a multicast routing procedure when said communication node determines itself to be said boundary node; and
an inside node distribution part for transferring said packet received according to a multicast routing procedure to said multicast group according to a multicast routing procedure when said communication node determines itself to be said inside node.

7. The multicast packet distribution system as claimed in claim 6, wherein said packet includes a domain division multicast address having a domain address for specifying said domain and a group address for identifying said group of said destination host;
said outside node distribution part transfers said packet to said domain address according to a unicast routing procedure;
said boundary node distribution part transfers said packet to said group address according to a multicast routing procedure; and
said inside node distribution part transfers said packet to said group address according to a multicast routing procedure.

8. An address structure of a packet used in a multicast packet distribution method used for distributing a packet from an origination host to a destination host belonging to a multicast group via communication nodes in a packet communication network that includes a plurality of domains, said address structure **characterized by**:
a domain address for specifying a domain;
a group address for identifying a group of said destination host; and
an identifier for indicating that said domain address and said group address can be used.

9. A mobile station that receives a packet multicasted according to a multicast packet distribution method used for distributing a packet from an origination host to said mobile station belonging to a multicast group via communication nodes in a packet communication network that includes a plurality of domains, said multicast packet distribution method **characterized by** the steps of:
sending a packet to a multicast group in a domain from said origination host;
transferring said packet to said domain via a communication node in the outside of said domain according to a unicast routing procedure; and
wherein, when a predetermined communication node in said domain receives said packet, said predetermined communication node transfers said packet to said mobile station according to a multicast routing procedure, and said packet includes a domain division multicast address having a domain address for specifying said domain and a group address for identifying a group of said mobile station;
said mobile station comprising:
a group registration part for registering said group address;
a domain obtaining part for obtaining said domain address that specifies a domain to which a communication node for said mobile station belongs from said communication node for said mobile station;
a multicast address generation part for generating a multicast address by combining said domain address and said group address;
a sending part for sending said multicast address to said communication node for said mobile station;
wherein said communication node for said mobile station transfers said packet to said mobile station by using said multicast address.

10. A mobile station that receives a packet multicasted according to a multicast packet distribution method used for distributing a packet from an origination host to said mobile station belonging to a multicast group via communication nodes in a packet communication network that includes a plurality of domains, said multicast packet distribution method **characterized by** the steps of:
sending a packet to a multicast group in a domain from said origination host;
transferring said packet to said domain via a communication node in the outside of said domain according to a unicast routing procedure; and
wherein, when a predetermined communication node in said domain receives said packet, said predetermined communication node transfers said packet to said mobile station according to a multicast routing procedure, and said packet includes a multicast address having a domain address for specifying said domain and a group address for identifying a group of said mobile station; said mobile station comprising:
a multicast address registration part for registering said multicast address;
a domain obtaining part for obtaining said domain address which specifies a domain to which a communication node for said mobile station belongs from said communication node for said mobile station;
a domain address determination part for determining whether a domain address obtained by said domain obtaining part and a domain address included in a multicast address registered by said multicast address registration part are the same;
a sending part for sending said multicast address to said communication node for said mobile station when it is determined that said domain address obtained by said domain obtaining part and said domain address included in a multicast address registered by said multicast address registration part are the same; and
wherein said communication node for said mobile station transfers said packet to said mobile station by using said multicast address.
